(19) Europäisches Patentamt
European Patent Office
Office européen des brevets

(11) Veröffentlichungsnummer: **0 295 401**
**A2**

(12) # EUROPÄISCHE PATENTANMELDUNG

(21) Anmeldenummer: **88106822.5**

(51) Int. Cl.⁴ **C08F 4/42 , C08F 4/72**

(22) Anmeldetag: **28.04.88**

(30) Priorität: **30.04.87 DE 3714563**
**02.10.87 DE 3733314**

(43) Veröffentlichungstag der Anmeldung:
**21.12.88 Patentblatt 88/51**

(84) Benannte Vertragsstaaten:
**BE CH DE FR GB LI NL**

(71) Anmelder: **WACKER-CHEMIE GMBH**
**Prinzregentenstrasse 22**
**D-8000 München 22(DE)**

(72) Erfinder: **Eck, Herbert, Dr. Dipl.-Chem.**
**Burg 11**
**D-8263 Burghausen(DE)**
Erfinder: **Fleischmann, Gerald, Dr. Dipl.-Chem.**
**Karrerweg 23**
**D-8261 Emmerting(DE)**
Erfinder: **Kolbig, Kunigunde**
**Qual., Waldstrasse 2**
**D-8342 Gumpersdorf-Postann(DE)**
Erfinder: **Prasse, Alfred**
**Zweigstrasse 5**
**D-8263 Burghausen(DE)**

(54) **Verfahren zur Polymerisation von polaren Verbindungen.**

(57) Gegenstand der Verbindung ist ein Verfahren zur Polymerisaton von polaren Verbindungen, die in α - Stellung zu einer Carbonyl- oder Nitrilgruppe eine C=C-Doppelbindung aufweisen, worunter insbesondere Acrylsäurederivate zu verstehen sind. Die Polymerisation ist quasi-ionisch, wird durch Organometallverbindungen des Siliciums, Germaniums oder Zinns, als Initiatoren zusammen mit nukleophilen oder elektrophilen Katalysatoren ausgelöst und bei Temperaturen im Bereich von -100°C bis +100°C durchgeführt. Als Initiatoren werden ausgewählte Silane, Silazane oder Siloxane verwendet, in welchen je Si-Atom mindestens ein Si-gebundenes H-Atom oder mindestens ein Si-gebundenes N-Atom in Form von sekundären oder tertiären Amino- oder Amidogruppen oder mindestens ein Si-gebundenes C-Atom in Form von Alkinyl- oder Cyclodienylgruppen vorhanden ist oder ausgewählte Silane, Germane, Stannane oder Siloxane, Germoxane, Stannoxane, in welchen je Metallatom mindestens eine metall-gebundene Kohlenwasserstoffoxygruppe vorhanden ist.

EP 0 295 401 A2

# Verfahren zur Polymerisation von polaren Verbindungen

Gegenstand der Erfindung ist ein Verfahren zur Polymerisation von polaren Verbindungen, die in alpha-Stellung zu einer Carbonyl- oder Nitrilgruppe eine C = C-Doppelbindung aufweisen, worunter insbesondere Acrylsäurederivate zu verstehen sind, wie Ester, Nitrile und Amide von Acrylsäure und Methacrylsäure.

In großtechnischem Maßstab werden polymere Acrylsäurederivate meist durch radikalische Polymerisation hergestellt, die durch freie Radikale bildende Initiatoren ausgelöst und durch Kettenabbruch zum Stillstand kommt, bei dem zwei der gebildeten Radikale miteinander reagieren. Dabei können Polymere mit hohem Molekulargewicht aber sehr breiter Molekulargewichtsverteilung erhalten werden. Blöckcopolymere mit definierter Anordnung der einzelnen Blocke können auf diese Weise nicht hergestellt werden.

Bekannt ist ferner die anionische Polymerisation von Acrylsäurederivaten, die nicht durch Radikale sondern durch Anionen bildende Initiatoren, wie alkali-organische Verbindungen, ausgelöst wird und die zu sogenannten lebenden Polymeren mit aktiven endständigen Gruppen führt, weil ein Kettenabbruch durch Reaktion von zwei gleichsinnig geladenen Ionen nicht möglich ist. Der Kettenabbruch kann künstlich herbeigeführt werden, beispielsweise durch Wasser- oder Alkoholzugabe. Nachteilig bei diesem Verfahren ist, daß die gewünschte enge Molekulargewichtsverteilung nur bei tiefen Temperaturen (bis zu -80 °C) und mit sehr reinen Ausgangsprodukten erreicht werden kann (vgl. US-A 4 351 924).

Auf ähnlicher Basis beruht die Polymerisation von Acrylsäurederivaten, die unter der Bezeichnung "quasi-ionisch" bekannt geworden ist. Hierbei wird die Startreaktion durch bestimmte ausgewählte Initiatoren zusammen mit nukleophilen oder elektrophilen Katalysatoren ausgelöst, wobei gleichfalls lebende Polymere gebildet werden. Als ausgewählte Initiatoren sind Silicium-, Zinn- und Germaniumverbindungen bekannt, in welchen die genannten Elemente an Sauerstoff- oder Kohlenstoffatome gebunden sind, wie Trimethylsilylketenacetale oder Trimethylsilylcyanid (vgl. US-A 4 414 372, US-A 4 417 034, US-A 4 508 880 und US-A 4 524 196). Dieses Verfahren kann bei Raumtemperatur und höher durchgeführt werden, erfordert jedoch ebenfalls Ausgangsmaterialien von hoher Reinheit und führt außerdem nur bei Methacrylsäurederivaten zu Polymeren mit der gewünschten engen Molekulargewichtsverteilung.

Mit Initiatoren vom Typ der Mercaptosilane sollen hingegen unter den genannten Bedingungen der quasi-ionischen Polymerisation lebende Polymere mit enger Molekulargewichtsverteilung auch bei Verwendung von Acrylsäurederivaten als Monomere erhalten werden (vgl. DE-A 3 504 168, die der US-A 4 626 579 entspricht).

Nach dem Stand der Technik können mit Hilfe der quasi-ionischen Polymerisation unter Verwendung bestimmter Organosiliciumverbindungen als Initiatoren in Verbindung mit nukleophilen oder elektrophilen Katalysatoren aus monomeren Acrylsäurederivaten beliebiger Art Polymere mit enger Molekulargewichtsverteilung erhalten werden, deren durchschnittliche Molekulargewichte selbst jedoch im allgemeinen relativ niedrig sind.

Aufgabe der Erfindung ist es, ein Verfahren zur Polymerisation von polaren Verbindungen, die in alpha-Stellung zu einer Carbonyl- oder Nitrilgruppe eine C = C-Doppelbindung aufweisen, zur Verfügung zu stellen, bei dem die Polymerisation mit Organometallverbindungen als Initiatoren zusammen mit nukleophilen oder elektrophilen Katalysatoren, gegebenenfalls in Gegenwart eines aprotischen Lösungsmittels ausgelöst wird, das im gesamten Temperaturbereich von -100 °C bis +100 °C für Acrylsäurederivate beliebiger Art universell anwendbar ist und das auch Polymere liefern kann, die sowohl ein hohes durchschnittliches Molekulargewicht als auch eine enge Molekulargewichtsverteilung haben.

Diese Aufgabe wird bei dem Verfahren zur Polymeristion der genannten Art erfindungsgemäß dadurch gelöst, daß als Initiatoren Organometallverbindungen verwendet werden, ausgewählt aus einer 1. Gruppe von Silanen, Silazanen und Siloxanen, die je Molekül mindestens eine Silyl-, Silazanyl-und/oder Siloxanylgruppe enthalten, in welchen je Si-Atom mindestens ein Si-gebundenes H-Atom oder mindestens ein Si-gebundenes N- Atom in Form von sekundären oder tertiären Amino- oder Amidogruppen, die mit organischen Resten substituiert sein können, welche mit oder ohne Einschluß des N-Atoms einen Ring bilden können oder mindestens ein Si-gebundenes C-Atom in Form von Alkinyl- oder Cyclodienylgruppen vorhanden ist oder aus einer 2. Gruppe von Silanen, Germanen, Stannanen, Siloxanen, Germoxanen und Stannoxanen, die je Molekül mindestens eine Silyl-, Germyl-, Stannyl- und/oder Siloxanyl-, Germoxyl-, Stannoxylgruppe enthalten, in welchen je Metallatom mindestens eine Metallatom-gebundene Kohlenwasserstoffoxygruppe vorhanden ist.

Von den als Initiatoren verwendeten Organometallverbindungen, die aus der 1. Gruppe von Silanen, Silazanen und Siloxanen ausgewählt wurden, sind als Silane solche der allgemeinen Formel

$R_{4-n}SiX_n$ (1)

bevorzugt, worin

R = Alkyl-, Cycloalkyl-, Alkenyl-, Aryl- oder Aralkylreste;
X = H-Atome oder Reste der Formeln

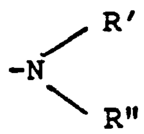 , 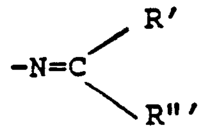 , $-C\equiv CR'$ und

(a) (b) (c)

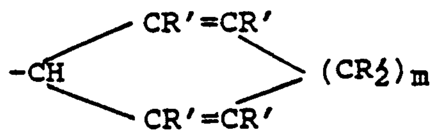 ,

(d)

R' = H-Atome oder Reste R;
R'' = Alkyl-, Alkenyl-, gegebenenfalls unterbrochen durch -O-, -OCO-, -NHCO-, -OCONH-, Aryl-, Aralkyl- oder Reste der Formeln -COOR oder -COR;
R''' = Alkyl-, gegebenenfalls unterbrochen durch -O-, -OCO-, -NHCO- oder -OCONH-, Aryl-, Aralkyl- oder Reste der Formeln -OR, -OCOR, -NHCOR, -CONHR, -NHCOOR oder -NHR;

wobei R' mit R'', bzw. R' mit R''' einen Ring mit 4 bis 13 Gliedern bilden kann und R'' oder R''' auch Sauerstoffatome sein können, deren zweite Valenz mit einer weiteren Silylgruppe verbunden ist;

n = 1, 2 oder 3, wenn X = H;
n = 1 oder 2, wenn X Reste der Formeln (a), (b), (c) oder (d) bedeutet und
m = 0, 1, 2 oder 3.

Als Silazane sind ketten- oder ringförmige Verbindungen bevorzugt, die mindestens eine Einheit der allgemeinen Formel

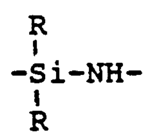 (2)

enthalten, worin R die angegebene Bedeutung hat und die restlichen Valenzen der Si-Atome mit Resten R abgesättigt oder mit NH-Gruppen weiterer Einheiten (2) verbunden sind.

Als Siloxane sind ketten- oder ringförmige Verbindungen bevorzugt, die mindestens eine Einheit der allgemeinen Formel

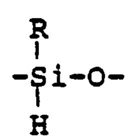 (3)

enthalten, worin R die angegebene Bedeutung hat und die restlichen Valenzen der Si-Atome mit Resten R abgesättigt oder mit O-Atomen weiterer Einheiten (3) oder Einheiten der allgemeinen Formel

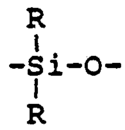

(3′)

verbunden sind.

Beispiele für Reste R in diesen erfindungsgemäß verwendeten Silanen, Silazanen oder Siloxanen, die gleich oder verschieden sein können, sind Alkylreste mit 1 - 18 C-Atomen, vorzugsweise 1 - 4 C-Atomen, die geradkettig oder verzweigt sein können, wie Methyl-, Ethyl-, n-Propyl-, iso-Propyl- und n-Butylreste; Cycloalkylreste, wie Cyclopentyl- und Cyclohexylreste; Alkenylreste mit 2 - 18 C-Atomen, vorzugsweise 2 -4 C-Atomen, wie Vinyl- und Allylreste; Arylreste, wie Phenyl-, Tolyl-, Xylyl- und Naphthylreste; und Aralkylreste, wie der Benzylrest. Aufgrund der leichten Zugänglichkeit sind Ethyl-, Vinyl-, Phenyl- und insbesondere Methylreste als Reste R besonders bevorzugt.

Die erfindungsgemäß verwendeten Silane entsprechend der allgemeinen Formel (1) können beispielsweise H-Silane sein, mit 1 - 3 Si-gebundenen H-Atomen je Molekül, wie Diphenylmethylsilan, Diphenylsilan, Phenylmethylsilan und Ethylsilan.

Weitere Beispiele sind Silane mit Si-gebundenen sekundären oder tertiären Aminogruppen, wie N-Trimethylsilybutylamin, N- Trimethylsilyldiethylamin, N-Trimethylsilyldodecylamin, N-Trimethylsilyl-allylamin, N-Trimethylsilylcyclohexylamin, N-Trimethylsilylbenzylamin und N-Trimethylsilylanilin; Silane mit Si-gebundenen Aminocarbonsäureester- oder Aminocarbonsäureamidgruppen, wie N-Trimethylsilyl-aminoessigsäureethylester, N-Trimethylsilyl-11-aminoundecansäure-ethylester, N-Trimethylsilyl-4-aminobenzoesäure-ethylester und N-Trimethylsilyl-aminoessigsäure-diethylamid; Silane mit Si-gebundenem N-Atom, das Teil eines heterocyclischen Ringes mit vorzugsweise 5 - 7 Gliedern ist, wie N-Trimethylsilyl-morpholin, 3-(Trimethylsilyl)-2-oxazolidinon, N-Trimethylsilyl-butyrolactam, N-Trimethylsilyl-caprolactam, N-Trimethylsilyl-pyrrolidin, N-Trimethylsilyl-thiazolidin, Trimethylsilyl-imidazol und Trimethylsilyl-benzimidazol, wobei zwei Silylgruppen vorhanden sein können, wie im 1,4-Bis-(trimethylsilyl)-piperazin-2,5-dion;
Silane mit Si-gebundener sekundärer Aminogruppe, die mit einem heterocyclischen Ring verbunden ist, wie 2-(Trimethylsilylamino)-pyrimidin, wobei bis zu drei Silylgruppen vorhanden sein können, wie im 2,4,6-Tris-(trimethylsilylamino)-1,3,5-triazin;
Silane mit Si-gebundenem N-Atom, das von einem Carbaminsäureester, einem Säureamid oder von Hydroxylamin stammt, wie N-Trimethylsilyl-carbaminsäure-ethylester und N-Trimethylsilyl- acetamid, wobei zwei Silylgruppen vorhanden sein können, wie im N,O-Bis-(trimethylsilyl)-acetamid, das bekanntlich in zwei tautomeren Formen existiert:

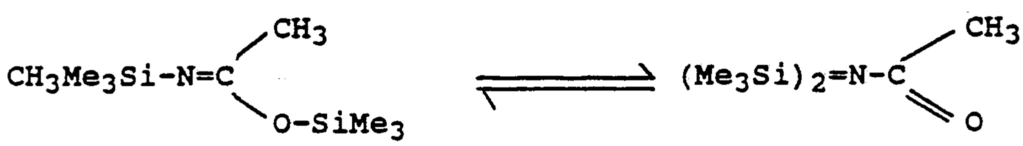

und wie im N,O-Bis-(trimethylsilyl)-hydroxylamin. Weitere Beispiele sind Silane mit Si-gebundenen Alkinyl- oder Cyclodienylgruppen, wie Bis-(trimethylsilyl)-acetylen, 1-Trimethylsilyl-1-propin, 1-Trimethylsilyl-1-octin und Trimethylsilyl-cyclopentadien.

Die erfindungsgemäß verwendeten Silazane aus Einheiten der allgemeinen Formel (2) können beispielsweise kettenförmig, wie Hexamethyldisilazan und 1,3-Divinyl-1,1,3,3-tetramethyldisilazan, cyclisch, wie Hexamethyl-cyclotrisilazan und Octamethyl-cyclotetrasilazan, oder polymer sein, wie Polydimethyl-silazan und Poly-methyl-phenylsilazan.

Die erfindungsgemäß verwendeten Siloxane aus Einheiten der allgemeinen Formel (3) und gegebenenfalls Einheiten der allgemeinen Formel (3′) können beispielsweise kettenförmig, wie Pentamethyl-disiloxan und Tetramethyldisiloxan, cyclisch, wie Methyl-H-cyclotrisiloxan, Methyl-H-cyclotetrasiloxan, Methyl-H-cyclooctasiloxan und Tri-(methyl-H-)dimethylcyclotetrasiloxan, oder polymer sein, wie Poly-methyl-H-siloxan und Poly-methyl-phenyl-H-siloxan, in welchen die H-Atome endständig oder entlang der Kette angeordnet sein können.

Von den als Initiatoren verwendeten Organometallverbindungen, die aus der 2. Gruppe der Silane, Siloxane, sowie der entsprechenden Germanium- und Zinnverbindungen ausgewählt wurden, sind als Silane, Germane, Stannane, Monosilane -germane oder -stannane der allgemeinen Formel

$R^{IV}_{4-p}M(OR^V)_p$ (4)

sowie Di- und Polyverbindungen der allgemeinen Formel

$R^VO[M(OR^V)_2]_x[M(R^{IV})(OR^V)]_y[M(R^{IV})_2]_zOR^V$ (5)

bevorzugt, worin
M = Si, Ge, Sn;
$R^{IV}$ = H-Atome, Alkyl-, Cycloalkyl-, Alkenyl-, Aryl-, Aralkyl- oder Alkarylreste, ggf. substituiert mit Fluor-, Chlor-, Alkoxy- oder Acyloxy-;
$R^V$ = Alkyl-, Cycloalkyl-, Aryl-, Aralkyl- , Alkaryl- oder Alkenylreste mit der Maßgabe, daß das Sauerstoffatom an einem $sp^3$-hybridisiertem C-Atom des Alkenylrestes gebunden sein muß;
p = 1, 2 oder 3;
x,y und z Werte von 0 bis 500 haben und die Summe von x + y + z mindestens 2 sein muß.

Als Siloxane sind solche aus Einheiten der allgemeinen Formel

$$R^{IV}_cSi(OR^V)_eO_{\frac{4-c-e}{2}} \quad (6)$$

bevorzugt, worin $R^{IV}$ und $R^V$ die oben angegebene Bedeutung haben;
c = 0, 1, 2 oder 3, durchschnittlich 0,01 bis 2,5;
e = 0, 1, 2 oder 3, durchschnittlich 0,1 bis 2,5 und die Summe von c + e je Einheit = höchstens 3, - sowie die entsprechenden Germanium- und Zinnverbindungen.

Beispiele für Reste $R^{IV}$ in den erfindungsgemäß verwendeten Silanen, Siloxanen, Germanen, Germoxanen, Stannanen oder Stannoxanen, die gleich oder verschieden sein können, sind Alkylreste mit 1 - 18 C-Atomen, vorzugsweise 1 - 4 C-Atomen, die geradkettig oder verzweigt sein können, wie Methyl-, Ethyl-, n-Propyl-, iso-Propyl-, und n-Butylreste; Cycloalkylreste, wie Cyclopentyl-, und Cyclohexylreste; Alkenylreste mit 2 - 18 C-Atomen, vorzugsweise 2 - 4 C-Atomen, wie Vinyl- und Allylreste; Arylreste, wie Phenyl-, Tolyl-, Xylyl- und Naphthylreste; und Aralkylreste, wie der Benzylrest. Aufgrund der leichten Zugänglichkeit sind Ethyl-, Vinyl-, Phenyl- und insbesondere Methylreste als Reste $R^{IV}$ besonders bevorzugt.

Beispiele für Reste $R^V$ sind die gleichen wie für $R^{IV}$ angegeben mit der o.g. Ausnahme für Alkenylreste bei welchen das Sauerstoffatom an einem $sp^3$-hybridisiertem C-Atom desselben gebunden sein muß, worunter zu verstehen ist, daß zwischen dem metall-gebundenem Sauerstoffatom und der C=C-Doppelbindung des Alkenylrestes mindestens ein C-Atom ohne Doppelbindungscharakter vorhanden sein muß. Das bedeutet, daß bei spielsweise Vinylreste als Reste $R^V$ ausgeschlossen sind.

Beispiele für erfindungsgemäß verwendbare metallorganische Verbindungen sind monomere Silane, wie Trimethoxy-methylsilan, Trimethoxy-ethylsilan, Trimethoxy-propylsilan, Trimethoxy-phenylsilan, Triethoxy-phenylsilan, Triisopropoxy-propylsilan, Dimethoxy-methyl-vinylsilan, Methoxy-dimethyl-vinylsilan und Disilane, wie 1,2-Dimethyl-1,1,2,2-tetramethoxy-disilan, sowie Methoxytributylzinn und Methoxytrimethylzinn.

Beispiele für Siloxane sind lösungsmittelfreie, niedrig viskose Alkylester oligomerer Alkylkieselsäuren wie solche aus Einheiten der durchschnittlichen Formel $CH_3Si(O)_{1,1}(OCH_3)_{0,8}$ mit einer Viskosität von etwa 30 $mm^2$ s. Im allgemeinen steigt das Initiierungsvermögen bei den erfindungsgemäß verwendeten Silanen und Siloxanen in der Reihenfolge:
$(R^{IV})_3Si(O-R^V) < (R^{IV})_2Si(O-R^V)_2 < (R^{IV})Si(OR^V)_3$,
sowie mit abnehmender Größe des Restes $O-R^V$:
O-iPr < O-Et < O-Me.

Die erfindungsgemäß als Initiatoren verwendeten Organometallverbindungen sind entweder handelsübliche Produkte oder sie können in an sich bekannter Weise hergestellt werden.

Für die Durchführung des Polymerisationsverfahrens werden die erfindungsgemäß verwendeten Organometallverbindungen zusammen mit nukleophilen oder elektrophilen Katalysatoren eingesetzt. Derartige Katalysatoren sind bekannt und beispielsweise in der US-A 4 417 034 beschrieben. Tetrabutyl ammoniumfluorid und Tetrabutylammoniumcyanid haben sich dabei besonders bewährt.

Das Molverhältnis von Initiator : Katalysator liegt üblicherweise im Bereich von 1000 bis 0,1 : 1, vorzugsweise im Bereich von 100 bis 10 : 1 und insbesondere im Bereich von 50 bis 1 : 1.

Das Polymerisationsverfahren selbst kann in Abhängigkeit von dem ausgewählten Initiator bei Temperaturen im Bereich von -100 °C bis +100 °C, vorzugsweise im Bereich von -20 °C bis +50 °C und insbesondere im Bereich von +10 °C bis +40 °C, durchgeführt werden. Entscheidend ist hierbei, daß unter Ausschluß von Feuchtigkeit gearbeitet wird, was üblicherweise mit Hilfe einer Inertgasatmosphäre, wie Argon oder Stickstoff, oder mit trockener Luft, erreicht werden kann. Die Polymerisation kann ohne oder in Gegenwart eines aprotischen Lösungsmittels als Lösungs-, Fällungs-, Suspensions- oder Emulsionspolymerisation diskontinuierlich oder kontinuierlich durchgeführt werden. Als Lösungsmittel werden dabei vorteilhaft solche ausgewählt, in welchen sowohl die eingesetzten Monomeren als auch Initiator und Katalysator bei der vorgesehenen Reaktionstemperatur ausreichend löslich sind. Beispiele für derartige aprotische Lösungsmittel sind Methylacetat, Ethylacetat, Butylacetat, Acetonitril, Toluol, Xylol, N,N-Dimethylformamid, N-Methylpyrrolidon, Tetrahydrofuran, tert.-Butylmethylether und Siliconöle, worunter insbesondere Polydimethylsiloxanöle und Polymethylphenylsiloxanöle mit Viskositäten im Bereich von etwa 5 - 500 mPa.s 25 °C zu verstehen sind.

Als zu polymerisierende Monomere können, wie bereits erwähnt, insbesondere Acrylsäurederivate beliebiger Art eingesetzt werden, wie Ester, Amide und Nitrile von Acrylsäure und Methacrylsäure. Beispiele hierfür sind insbesondere Acrylsäureester, wie Acrylsäure-n-butylester und Acrylsäure-2-ethylhexylester; Methacrylsäureester, wie Methacrylsäuremethyl-ester, Methacrylsäure-ethylester, Methacrylsäure-n-butyl-ester, Methacrylsäure-cyclohexylester, Methacrylsäuredodecylester und Methacrylsäure-tetradecylester.

Die Durchführung des Polymerisationsverfahrens kann in an sich bekannter Weise diskontinuierlich oder kontinuierlich vorgenommen werden. Vorteilhaft werden Initiator und Katalysator vorgelegt und die Monomeren mit oder ohne Lösungsmittel zudosiert, wobei durch mechanische Bewegung die gute Verteilung der Monomeren unterstützt und durch Kühlung dafür gesorgt werden kann, daß die vorgesehene Temperatur der exotherm verlaufenden Reaktion nicht überschritten wird.

Nachdem die zugegebenen Monomeren verbraucht worden sind, kommt die Polymerisationsreaktion zum Stillstand. Im Reaktionsgefäß liegen jedoch lebende Polymere vor, die auch nach dem Verbrauch der Monomeren noch aktiv sind. Diese können in bekannter Weise durch Zugabe von anderen Monomeren zu Blockmischpolymeren weiterpolymerisiert oder durch Zugabe von Kettenabbruchreagenzien oder von sogenannten Kopplungsmitteln in inaktive Polymere umgewandelt werden, wie beispielsweise in der US-A 4 417 034 ausführlich beschrieben.

Mit Hilfe der erfindungsgemäß verwendeten Initiatoren können nicht nur Acrylsäurederivate beliebiger Art in einem breiten Temperaturbereich quasi-ionisch polymerisiert werden, sondern die erhaltenen Polymeren mit vorwiegend syndiotaktischer Struktur zeichnen sich durch ein hohes Molekulargewicht und eine enge Molekulargewichtsverteilung aus.

Die Erfindung wird in den folgenden Beispielen näher erläutert. In den folgenden Beispielen wurden die Polymerisationsreaktionen jeweils unter Argon als Inertgasatmosphäre bzw. trockener Luft durchgeführt, wenn nichts anderes angegeben ist. Die verwendeten Lösungsmittel wurden nach bekanntem Verfahren getrocknet und die Monomeren durch Filtration über Aluminiumoxid gereinigt.

Die Herstellung der wasserfreien Lösung von Tetrabutylammoniumfluorid in Tetrahydrofuran, bzw. Toluol, erfolgte in bekannter Weise mittels Calciumhydrid. Die polymeren Endprodukte wurden NMR-spektroskopisch ($^1$H-NMR) sowie gelchromatographisch (GPC) charakterisiert. Silane und Siloxane aus der technischen Fertigung wurden direkt ohne zusätzliche Reinigung eingesetzt. Die Kettenstruktur der erhaltenen Polymeren war zu 60 - 70 % syndiotaktisch, wie durch NMR nachgewiesen. Das mittlere Molekulargewicht $M_n$ wurde jeweils durch GPC bestimmt.

Beispiel 1

In eine Lösung aus 750 mg (5,6 mmol) Tetramethyldisiloxan und 0,15 mmol (1,5ml einer 0,1 M Lösung in Tetrahydrofuran) Tetrabutylammoniumfluorid in 100 ml wasserfreiem Tetrahydrofuran wurden unter Rühren und Kühlen innerhalb von 30 min 50 g (500 mmol) Methacrylsäuremethylester so langsam eingetragen, daß die Reaktionstemperatur 30 °C nicht überstieg. Nach Beendigung der exothermen Reaktion wurde noch weitere 4 h bei Raumtemperatur gerührt. Anschließend wurde das Lösungsmittel im Vakuum entfernt und das Produkt bei 60 °C getrocknet.
Ausbeute: 50 g (quantitativ); Fp: 263 °C; GPC: $\overline{M}_n$ 85 000

Beispiel 2

In eine Lösung aus 1 ml Polymethyl-H-siloxan in 100 ml wasserfreiem Toluol wurden nacheinander 0.2 mmol (2 ml einer 0.1 M Lösung in Toluol) Tetrabutylammoniumfluorid und 10 g (59.5 mmol) Methacrylsäurecyclohexylester eingetragen. Nach dem Anspringen der stark exothermen Reaktion wurden weitere 74.1 g (440.5 mmol) Methacrylsäurecyclohexylester unter Kühlung so langsam zugegeben, daß die Reaktionstemperatur 35 °C nicht überstieg. Nach Beendigung der exothermen Reaktion wurde die zähe Masse weitere 3 h bei Raumtemperatur stehen gelassen. Anschließend wurde das Produkt im Vakuum getrocknet.
Ausbeute: 85 g (quantitativ): Fp: 240 - 260 °C; GPC:
$\overline{M}_n$ 1 400 000.

Beispiel 3

In eine Lösung aus 750 mg (5.6 mmol) Tetramethyldisiloxan und 0,1 mmol (1 ml einer 0,1 M Lösung in Tetrahydrofuran) Tetrabutylammoniumfluorid in 100 ml wasserfreiem tert.Butyl-methylether wurden innerhalb von 30 min. unter Kühlung und Rühren 71 g (500 mmol) Methacrylsäure-n-butylester langsam eingetragen. Nach 6 h Reaktionszeit wurde die Reaktionsmischung aufgearbeitet.
Ausbeute: 70.6 g (quantitativ); Fp: 226 °C; GPC: $\overline{M}_n$ 385 000.

Beispiel 4

Das Verfahren gemäß Beispiel 1 wurde wiederholt mit der Abänderung, daß an Stelle von Tetramethyldisiloxan 756 mg (5.1 mmol) Pentamethyldisiloxan als Initiator eingesetzt wurden.
Ausbeute: 49 g (98 %): Fp: 235 °C, GPC: $\overline{M}_n$ 54 000.

Beispiel 5

In eine Lösung aus 1.02 g (5.0 mmol) N,O-Bis-(trimethylsilyl)-acetamid und 0,2 mmol (2 ml einer 0,1 M Lösung in Toluol) Tetrabutylammoniumfluorid in 70 ml wasserfreiem Toluol wurden unter Kühlung 50 g (500 mmol) Methacrylsäuremethylester so langsam eingetragen, daß die Reaktionstemperatur + 10 °C nicht überstieg. Nach weiteren 3 h Rühren bei Raumtemperatur wurde das Lösungsmittel im Vakuum entfernt.
Ausbeute: 25 g (50 %); Fp: 115 C; GPC: $\overline{M}_n$ 37 000.

Beispiel 6

Der folgende Versuch wurde unter trockener Luft durchgeführt: In 12.8 g (100 mmol) Acrylsäure-n-butylester wurden 203 mg (1 mmol) N,O,-Bis-(trimethylsilyl)-acetamid und 0,1 mmol (1 ml einer 0,1 M Lösung in Tetrahydrofuran) Tetrabutylammoniumfluorid eingetragen. Es trat sofort eine stark exotherme Reaktion ein. Es wurde ein hochviskoses Polymeres, dessen Monomergehalt < 1 % war (nachgewiesen durch NMR), in quantitativer Ausbeute erhalten. GPC: $\overline{M}_n$ 10 800.

Beispiel 7

In eine gekühlte Lösung aus 813 mg (4 mmol) N,O,-Bis-(trimethylsilyl)-acetamid und 0,1 mmol (1 ml einer 0.1 M Lösung in Tetrahydrofuran) in 100 ml wasserfreiem Toluol wurden 64 g (500 mmol) Acrylsäure-n-butylester so langsam eingetragen, daß die Temperatur + 5 °C nicht überstieg. Nach beendeter Zugabe wurde auf Raumtemperatur erwärmt. Nach Aufarbeitung wurden 40 g eines zähen klebrigen Polymeren erhalten. GPC: $\overline{M}_n$ 65 000.

Beispiel 8

Eine Lösung aus 64 g (500 mmol) Acrylsäure-n-butylester und 657 mg (3 mmol) Hexamethylcyclotrisilazan in 100 ml wasserfreiem Toluol wurde unter Rühren mit 0,1 mmol (1 ml einer 0,1 M Lösung in Toluol) Tetrabutylammoniumfluorid versetzt. Es erfolgte eine leicht exotherme Reaktion, durch die das nicht gekühlte Reaktionsgemisch innerhalb 45 min. auf 31.5° C erwärmt wurde. Nach 20 h wurde das Lösungsmittel entfernt und das Produkt im Hochvakuum getrocknet. Es wurden 49,6 g eines hochviskosen Öls erhalten. GPC: $\overline{M}_n$ 65 000.

Beispiel 9

64 g (500 mmol) Acrylsäure-n-butylester wurden innerhalb von 20 min. unter kräftigem Rühren und guter Kühlung in eine Lösung aus 742 mg (5 mmol) Pentamethyldisiloxan und 0,1 mmol (1 ml einer 0,1 M Lösung in Tetrahydrofuran) Tetrabutylammoniumfluorid eingetragen. Nach 4 h wurde das Lösungsmittel im Vakuum entfernt und das Produkt bei 60° C im Hochvakuum ge trocknet. Es wurden 60,8 g eines hochviskosen Polymeren erhalten. GPC: $\overline{M}_n$ 54 000.

Beispiel 10

20 g (200 mmol) Methacrylsäuremethylester wurden durch Zugabe von 336 mg (2,5 mmol) Tetramethyldisiloxan und 0,5 ml einer 0,1 M Tetrabutylammoniumfluorid-Lösung in Toluol polymerisiert. Nach 3 h wurden in das Reaktionsgemisch 38,4 g (300 mmol) Acrylsäure-n-butylester eingetragen, wobei eine exotherme Reaktion auftrat. Nach Aufarbeitung wurden 33 g eines wachsartigen Produktes erhalten. GPC: $\overline{M}_n$ 113 000.

Beispiel 11

In eine Lösung aus 403 mg (3 mmol) Tetramethyldisiloxan und 0,5 ml einer 0,1 M Tetramethylammoniumfluorid-Lösung in Tetrahydrofuran in wasserfreiem Toluol wurden innerhalb von 30 min. eine Mischung aus 92 g (500 mmol) Acrylsäure-2-ethylhexylester und 1,0 ml einer 0.1 m-Tetrabutylammoniumfluorid-Lösung eingetragen. Die Reaktionstemperatur wurde durch Kühlung unterhalb + 35° C gehalten. Die exotherme Reaktion war nach 5 h beendet. Nach Aufarbeitung wurden 91,5 g (Ausbeute quantitativ) eines hochviskosen Polymeren erhalten. GPC: $\overline{M}_n$ 72 000.

Beispiel 12

In eine Lösung aus 5,7 g (50 mmol) Methacrylsäureethylester in 20 ml wasserfreiem Tetrahydrofuran wurden nacheinander 34 mg (0,25 mmol) Tetramethyldisiloxan und 0,1 ml einer 0,1 M Tetrabutylammoniumfluorid-Lösung in Tetrahydrofuran eingetragen. Durch die einsetzende exotherme Reaktion wurde das Lösungsmittel zum Sieden erhitzt. Nach 24 h Stehenlassen wurden weitere 5,7 g (50 mmol) Methacrylsäureethylester in ,die Reaktionsmischung eingetragen, wobei wiederum eine exotherme Reaktion einsetzte. Nach Aufarbeitung wurden 11 g eines weißen Polymeren erhalten: Fp: 112° C.

In den Beispielen 13 - 22 wurden jeweils 5 ml Initiator, 0,2 ml Katalysator in 100 ml Lösungsmittel vorgelegt und anschließend 500 mmol Monomere (bei Methacrylatestern 13.0 = handelsübliches Produkt aus Methacrylsäuredodecyl- und Methacrylsäuretetradecylester, 150 mmol) zugegeben. Die Reaktionstemperatur wurde durch Kühlung zwischen + 20 und + 30° C gehalten. Nach Beendigung der exothermen Reaktion wurde weitere 4 h bei Raumtemperatur gerührt. Alle Polymerisationen wurden unter Argon durchgeführt. Die erhaltenen Produkte wurden bei 60° C im Hochvakuum getrocknet. Die verwendeten Ausgangsprodukte und die Ergebnisse sind in der folgenden Tabelle zusammengestellt.

| Beispiel | Monomer | Initiator | Katalysator | LM***) | Ausbeute | $\tilde{M}_n$ (GPC) |
|---|---|---|---|---|---|---|
| 13 | Acrylsäure-n-butyl-ester | Tetramethyldisiloxan | $Bu_4NCN$ *) | Toluol | 83 % | 42 000 |
| 14 | " | 3-Trimethylsilyl-2-oxazolidinon | $Bu_4NF$ **) | " | 98 % | 24 400 |
| 15 | " | N-Trimethylsilyl-acetamid | " | " | 94 % | 25 900 |
| 16 | " | Trimethylsilyl-imidazol | " | " | 97 % | 13 000 |
| 17 | Acrylsäure-2-ethylhexylester | 3-Trimethylsilyl-2-oxazolidinon | " | " | 98 % | 50 000 |
| 18 | Methacrylsäure-ethylester | Diphenyl-methyl-silan | " | THF ****) | 100 % | 69 000 |
| 19 | " | 3-Trimethylsilyl-2-oxazolidinon | " | " | 100 % | 220 000 |
| 20 | " | Trimethylsilyl-imidazol | " | " | 100 % | 128 000 |
| 21 | Methacrylester 13,0 | Tetramethyl-disiloxan | " | " | 98 % | 180 000 |
| 22 | Acrylsäuremethyl-ester | Bis-(trimethylsilyl) acetylen | " | " | 86 % | 17 900 |

*) $Bu_4NCN$ = Tetrabutylammoniumcyanid
**) $Bu_4NF$ = Tetrabutylammoniumfluorid
***) LM = Lösungsmittel
****) THF = Tetrahydrofuran

Beispiel 23

In eine Lösung aus 0.41g (3 mmol) Trimethoxy-methylsilan und 0.1 mml (1 ml einer 0.1 M Lösung in Toluol) Tetrabutylammoniumfluorid in 100 ml wasserfreiem Toluol wurden unter Rühren und Kühlen innerhalb von 30 min. 92 g (500 mmol) Acrylsäure-2-ethyl-hexyl-ester so langsam eingetragen, daß die Reaktionstemperatur 40 °C nicht überstieg. Nach Beendigung der exothermen Reaktion wurde noch weitere 4 h bei Raumtemperatur gerührt. Anschließend wurde das Lösungsmittel im Vakuum entfernt und das Produkt bei 60 °C im Hochvakuum getrocknet.
Ausbeute 88 g (95 % d. Th.); hochviskoses Produkt ; GPC: $\overline{M}_n$ 270 00.

Beispiel 24

In eine Lösung aus 0.41 g (3 mmol) Trimethoxymethylsilan und 0,1 mmol (1 ml einer 0,1 M Lösung in Toluol) Tetrabutylammoniumfluorid in 100 ml wasserfreiem Toluol wurden 43 g (500 mmol ) Acrylsäuremethylester unter Kühlung so langsam eingetragen, daß die Reaktionstemperatur 40 °C nicht überstieg. Nach Beendigung der exothermen Reaktion wurde noch weitere 4 h bei Raumtemperatur gerührt. Anschließend wurde das Produkt im Vakuum getrocknet.
Ausbeute: 31 g (72 % d. Th.); wachsartiges Produkt; GPC: $\overline{M}_n$ 9000.

Beispiel 25

Das Verfahren gemäß Beispiel 23 wurde wiederholt mit der Abänderung . daß an Stelle von Acrylsäure-2-ethyl-hexylester 26,5 g (500 mmol) Acrylsäurenitril polymerisiert wurden.
Ausbeute: 6.5 g (25% d. Th.); Zers.:186 °C.

Beispiel 26

In eine Lösung aus 0,4 g (3 mmol) Dimethoxy-methyl-vinylsilan und 0,1 mmol (1 ml einer 0.1 M Lösung in Tetrahydrofuran) Tetrabutylammoniumfluorid in 100 ml wasserfreiem Toluol wurden unter Kühlung und Rühren 92 g (500 mmol) Acrylsäure-2-ethyl-hexylester so langsam eingetragen, daß die Reaktionstemperatur +10 °C nicht überstieg. Nach weiteren 5 h Rühren bei Raumtemperatur wurde das Lösungsmittel im Vakuum entfernt und das Produkt bei 60 °C im Hochvakuum getrocknet.
Ausbeute: 92 g (quantitativ); hochviskoses Produkt; GPC: $\overline{M}_n$ 26000.

Beispiel 27

Das Verfahren gemäß Beispiel 26 wurde wiederholt mit der Abänderung, daß 74 g (500 mmol) Acrylsäure-n-butylester mit 0,72 g (3 mmol) Triethoxy-phenylsilan als Initiator und 0.25 mmol Tetrabutylammoniumfluorid als Katalysator polymerisiert wurden.
Ausbeute: 69.8 g (97 % d. Th.); viskoses Produkt; GPC: $\overline{M}_n$ 24000.

Beispiel 28

Das Verfahren gemäß Beispiel 26 wurde wiederholt mit der Abänderung, daß 74 g (500 mmol) Acrylsäure -tert. butylester mit 0,68 g (5 mmol) Trimethoxy-methylsilan als Initiator und 0.2 mmol Tetrabutylammoniumfluorid als Katalysator bei Temperaturen zwischen 0 °C und +10 °C polymerisiert wurden.
Ausbeute: 66,9 g (90% d. Th.); Fp. 103 °C; GPC: $\overline{M}_n$ 55000.

Beispiel 29

In eine Lösung aus 10 g (100 mmol) Methacrylsäure-methylester in 3) ml wasserfreiem Toluol wurden 0.72 g (5 mmol) Trimethoxy-methylsilan und 0,2 mmol Tetrabutylammoniumfluorid (2 ml einer 0.1 M Lösung in Tetrahydrofuran) eingetragen. Nach 20 min. trat eine stark exotherme Reaktion auf. Nach Abkühlen auf 20 °C wurden unter Kühlung und kräftigem Rühren weitere 40 g (400 mmol) Methylacrylsäure-methylester in 50 ml wasserfreiem Toluol so langsam eingetragen, daß die Reaktionstemperatur 20 °C nicht überstieg. Nach weitern 2 h Stehenlassen wurde das Lösungsmittel im Vakuum entfernt und das Produkt bei 60 °C im Hochvakuum getrocknet.
Ausbeute: 42 g (84 % d. Th.): Fp. 264 °C : GPC: $\overline{M}_n$ 18000.

Beispiel 30

Das Verfahren gemäß Beispiel 26 wurde wiederholt mit der Abänderung, daß eine Mischung aus 40 g (400 mmol) Acrylsäureethylester und 24 g (100 mmol) Acrylsäure-dodecylester mit 0.72 g (5 mmol) Trimethoxy-methylsilan als Initiator und 0.4 mmol Tetrabutyl-ammoniumfluorid als Katalysator polymerisiert wurden.
Ausbeute: 60 g (94 % d. Th.); hochviskoses Produkt.

Beispiel 31

Das Verfahren gemäß Beispiel 23 wurde wiederholt mit der Abänderung, daß 64 g (500 mmol) Acrylsäure-n-butylester mit 2 g eines Siloxans aus Einheiten der durchschnittlichen Formel $CH_3Si(O)_{1,1}$-$(OCH_3)_{0,8}$ mit einer Viskosität von 30 $mm^2$ s, gelöst in 100 ml wasserfreiem Toluol als Initiator und ).25 mmol Tetrabutylammoniumfluorid (1ml einer 0,25 M Lösung in Tetrahydrofuran) als Katalysator polymerisiert wurden.
Ausbeute: 56,8 g (86% d. Th.); zähviskoses Produkt: GPC: $\overline{M}_n$ 22000.

Beispiel 32

Das Verfahren gemäß Beispiel 23 wurde wiederholt mit der Abänderung, daß 64 g (500 mmol) Acrylsäure-tert. butylester mit 0,58 g (5 mmol) Methoxy-dimethyl-vinylsilan als Initiator und 0,2 mmol Tetrabutylammoniumfluorid als Katalysator polymerisiert wurden.
Ausbeute: 58 g (90,6 % d. Th.): Fp. 80 °C: GPC: $\overline{M}_n$ 22000.

Beispiel 33

Das Verfahren gemäß Beispiel 23 wurde wiederholt mit der Abänderung, daß 64 g (500 mmol) Acrylsäure-n-butylester mit 1,6 g (5 mmol) Methoxy-tributylzinn als Initiator, gelöst in 150 ml wasserfreiem tert. Butylmethylether und 0.25 mmol Tetrabutylammoniumfluorid (1 ml einer 0.25 M Lösung in Tetrahydrofuran) als Katalysator polymerisiert wurden.
Ausbeute: 32 g (50 % d.Th.) viskoses Öl: GPC: $\overline{M}_n$ 6500.

Beispiel 34

Das Verfahren gemäß Beispiel 23 wurde wiederholt mit der Abänderung, daß 60 g (500 mmol) Acrylsäure-tert. butylester mit 1,6 (5 mmol) Methoxy-tributylzinn als Initiator, gelöst in 90 ml wasserfreiem tert. Butyl-methylether und 0,25 mmol Tetrabutylammoniumfluorid (1 ml einer 0.25 M Lösung in Tetrahydrofuran) als Katalysator polymerisiert wurden.
Ausbeute: 55,7 g (66 % d.Th.): FP.: 90 °C: GPC: $\overline{M}_n$ 37500.

Beispiel 35

Das Verfahren gemäß Beispiel 23 wurde wiederholt mit der Abänderung, daß 64 g (500 mmol) Acrylsäure-tert. butylester mit 1,6 g (5 mmol) Methoxy-tributylzinn als Initiator, gelöst in 100 ml wasserfreien Toluol und 0,25 mmol Tetrabutylammoniumfluorid (1 ml einer 0,25 M Lösung in Tetrahydrofuran) als Katalysator polymerisiert wurden.
Ausbeute: 64 g (quantitativ); FP.: 94° - 96° C.

## Ansprüche

1. Verfahren zur Polymerisation von polaren Verbindungen, die in α -Stellung zu einer Carbonyl- oder Nitrilgruppe eine C=C-Doppelbindung aufweisen, bei dem die Polymerisation mit Organometallverbindungen des Siliciums, Germaniums und Zinn als Initiatoren zusammen mit nukleophilen oder elektrophilen Katalysatoren ausgelöst und bei Temperaturen im Bereich von -100° C bis +100° C, gegebenenfalls in Gegenwart eines aprotischen Lösungsmittels durchgeführt wird, dadurch gekennzeichnet, daß als Initiatoren Organometallverbindungen verwendet werden, ausgewählt aus einer 1.Gruppe von Silanen, Silazanen und Siloxanen, die je Molekül mindestens eine Silyl-, Silazanyl- und oder Siloxanylgruppe enthalten, in welchen je Si-Atom mindestens ein Si-gebundenes H-Atom oder mindestens ein Si-gebundenes N-Atom in Form von sekundären oder tertiären Amino- oder Amidogruppen, die mit organischen Resten substituiert sein können, welche mit oder ohne Einschluß des N-Atoms einen Ring bilden können oder mindestens ein Si-gebundenes C-Atom in Form von Alkinyl-oder Cyclodienylgruppen vorhanden ist oder ausgewählt aus einer 2. Gruppe von Silanen, Germanen, Stannanen und Siloxanen, Germoxanen und Stannoxanen die je Molekül mindestens eine Silyl- Germyl-, Stannyl- und oder Siloxanyl-, Germoxanyl-, Stannoxanylgruppe enthalten, in welchen je Metallatom mindestens eine metallgebundene Kohlenwasserstoffoxygruppe vorhanden ist.

2. Verfahren nach Anspruch 1, dadurch gekennzeichnet, daß als Silane ausgewählt aus der 1. Gruppe von Silanen, Silazanen und Siloxanen solche der allgemeinen Formel

$R_{4-n}SiX_n$ (1)

verwendet werden, worin
R = Alkyl-, Cycloalkyl-, Alkenyl-, Aryl- oder Aralkylreste;
X = H-Atome oder Reste der Formeln

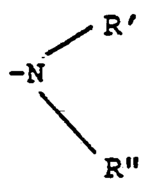

(a)

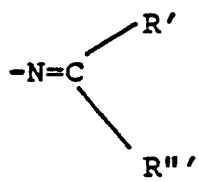

(b)

$-C\equiv CR'$ und

(c)

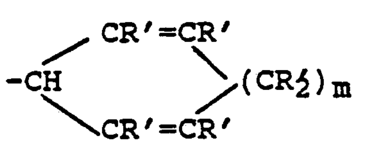

;

(d)

R' = H-Atome oder Reste R;
R'' = Alkyl-, Alkenyl-, gegebenenfalls unterbrochen durch -O-, -OCO-, -NHCO-, -OCONH-, Aryl, Aralkyl- oder Reste der Formeln -COOR oder -COR;

R‴ = Alkyl-, gegebenenfalls unterbrochen durch -O-, -OCO-, -NHCO oder -OCONH-, Aryl, Aralkyl- oder Reste der Formeln -OR, -OCOR, -NHCOR, -CONHR, -NHCOOR oder -NHR;
wobei R′ mit R″, bzw. R′ mit R‴ einen Ring mit 4 bis 13 Gliedern bilden kann und R″ oder R‴ auch Sauerstoffatome sein können, deren zweite Valenz mit einer weiteren Silylgruppe verbunden ist;

n = 1, 2 oder 3, wenn X = H;
n = 1 oder 2, wenn X Reste der Formeln (a), (b), (c) oder (d) bedeutet und
m = 0, 1, 2 oder 3.

3. Verfahren nach Anspruch 1, dadurch gekennzeichnet, daß als Silazane ausgewählt aus der 1. Gruppe von Silanen, Silazanen und Siloxanen ketten- oder ringförmige Verbindungen verwendet werden, die mindestens eine Einheit der allgemeinen Formel

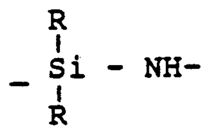 (2)

enthalten, worin R die angegebene Bedeutung hat und die restlichen Valenzen der Si-Atome mit Resten R abgesättigt oder mit NH-Gruppen weiterer Einheiten (2) verbunden sind.

4. Verfahren nach Anspruch !, dadurch gekennzeichnet, daß als Siloxane ausgewählt aus der 1. Gruppe von Silanen, Silazanen und Siloxanen ketten- oder ringförmige Verbindungen verwendet werden, die mindestens eine Einheit der allgemeinen Formel

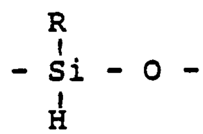 (3)

enthalten, worin R die angegebene Bedeutung hat und die restlichen Valenzen der Si-Atome mit Resten R abgesättigt oder mit O-Atomen weiterer Einheiten (3) oder Einheiten der allgemeinen Formel

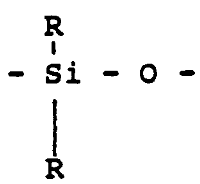 (3′)

verbunden sind.

5. Verfahren nach Anspruch 1, dadurch gekennzeichnet, daß als Silane, Germane und Stannane ausgewählt aus der 2. Gruppe der Silane, Siloxane, sowie der entsprechenden Germanium- und Zinnverbindungen solche der allgemeinen Formel

$R^{IV}_{4-p}M(OR^{V})_p$ (4)

sowie Di- und Polysilane -germane und -stannane der allgemeinen Formel

$R^{V}O[M(OR^{V})_2]_x[M(R^{IV})(OR^{V})]_y[M(R^{IV})_2]_zOR^{V}$ (5)

verwendet werden, worin M = Si, Ge oder Sn;

$R^{IV}$ = H-Atome, Alkyl-, Cycloalkyl-, Alkenyl-, Aryl-, Aralkyl- oder Alkarylreste, ggf. substituiert mit Fluor-, Chlor-, Alkoxy- oder Acyloxy-;
$R^{V}$ = Alkyl-, Cycloalkyl-, Aryl-, Aralkyl-, Alkaryl- oder Alkenylreste mit der Maßgabe, daß das Sauerstoffa-

tom an einem $sp^3$-hybridisierten C-Atom des Alkenylrestes gebunden sein muß;
p = 1, 2 oder 3;
x,y und z Werte von 0 bis 500 haben die Summe von x + y + z mindestens 2 sein muß.

6. Verfahren nach Anspruch 1, dadurch gekennzeichnet, daß als Siloxane ausgewählt aus der 2. Gruppe der Silane, Siloxane, sowie der entsprechenden Germanium- und Zinnverbindungen solche aus Einheiten der allgemeinen Formel

$$R_cSi(OR')_eO_{\frac{4-c-e}{2}} \quad (6)$$

verwendet werden, worin $R^{IV}$ und $R^{V}$ die oben angegebene Bedeutung haben;
c = 0, 1, 2 oder 3, durchschnittlich 0.01 bis 2.5;
e = 0, 1, 2 oder 3, durchschnittlich 0,1 bis 2.5 und die Summe von c + e je Einheit = höchstens 3, sowie die entsprechenden Germanium- und Zinnverbindungen.